# EUROPEAN PATENT SPECIFICATION

(11) **EP 2 962 539 B1**
(45) Date of publication and mention of the grant of the patent: **20.09.2017**
(21) Application number: 14175129.7
(22) Date of filing: 01.07.2014
(51) Int. Cl.: A01C 17/00, E01C 19/20

(54) **Distribution device**
Verteilungsvorrichtung
Dispositif de distribution

(43) Date of publication of application: 06.01.2016
(73) Proprietor: Kverneland Group Nieuw-Vennep BV, 2153 LR Nieuw-Vennep (NL)
(72) Inventor: Thybaut, Maarten, 2032 KR Haarlem (NL); Van der Marel, Piet Jan, DK 2171 Sassenheim (NL)
(74) Representative: Schweiger, Johannes

(56) References cited:
- US-A- 1 576 366
- US-A- 2 622 722
- US-A- 3 592 394

## Description

The invention starts out from a distribution device according to the preamble of Claim 1. Such distribution devices are generally known. For example, a centrifuging spreader is known from the publication EP 0 269 501 B1, in which granulate is charged in between two rollers rotating in opposite direction to one another and trapped between the two rollers in such a manner that it can be accelerated through the rotational movements of the two rollers,

Document US 3,592,394 discloses a centrifugal belt thrower with flexible flaps supported in the discharge wheel. This known thrower has a fixed discharge angle. However it is disadvantageous in the prior art that the granulate through the trapping between the two rollers is destroyed or reduced in size, as a result of which the effectiveness of the output granulate can be substantially impaired.

It is therefore the object of the present invention to make available a distribution device which does not have the disadvantages of the prior art and in particular prevents destroying the granulate during the acceleration, and which allows to vary the discharge angle. This object is solved by the distribution device according to the invention in accordance with Claim 1. The basic idea of the invention consists in that the granulate during its acceleration, caused in particular predominantly, preferentially exclusively through centrifugal force, is arranged within the intermediate space, which is formed by the groove and the belt so that the granulate cannot be destroyed.

This is surprisingly possible since through the rotation of the ejection wheel such large centrifugal forces are created which are sufficient to press the granulate onto the belt strongly enough so that the granulate, cannot fall out of the intermediate space during the rotation of the ejection wheel, wherein especially the granulate is accelerated to or close to the speed of the belt. Since on the other hand the centrifugal forces that are created are small enough, the granulate cannot be destroyed.

The distribution device can be attached for example laterally to a vehicle. However it can also be arranged in the rear region of the vehicle. The granulate can basically be any type of particle-shaped solid material. It is preferred that the distribution device is employed in the agricultural sector, above all for ejecting out particle-shaped solid fertiliser. Alternatively, the distribution device can also be employed as spreading vehicle, especially in a spreading device, with road salt as granulate.

In the following, any type of recess in the ejection wheel is considered as a groove. The groove merely has to be large enough in order to be able to receive the desired quantity of granulate. The ejection wheel is designed rotatable in such a manner that it can accelerate and eject the granulate through its rotary movement.

Advantageous configurations and further developments of the invention are shown in the subclaims and in the description making reference to the drawings.

According to a preferred further development it is provided that the ejection wheel is rotatable about an axis of rotation which is arranged horizontally, in particular in travelling direction and/or parallel to a longitudinal axis of the distribution device. Through the horizontal arrangement it is advantageously possible that the granulate can be output comparatively evenly, as a result of which for example in the case of fertiliser improved distribution of the fertiliser can be achieved. This is particularly important when the distribution device ejects the granulate transversely to the travelling direction and/or is attached laterally on a vehicle since in this case areas which are substantially rectangular in shape can be fertilised and the distribution of fertiliser can be accurately controlled.

According to the invention the acceleration device is designed in such a manner that the granulate is transported by the ejection wheel in vertical direction from the bottom up.

The centrifugal forces which are created during the rotation prevent that in the process the granulate can fall out of the intermediate space towards the bottom. In the upper region, the belt separates from the ejection wheel so that the intermediate space is opened and the granulate can be ejected at an ejection angle which is defined by the position of the belt in this region.

Preferably, the distribution device is configured in such a manner that the belt separates from the ejection wheel in the upper region of the ejection wheel. Because of this, the intermediate space is opened and the granulate can be ejected. The ejection angle at which the granulate leaves the ejection wheel can be adjusted relative to the horizontal. Adjusting the ejection angle can be varied in particular in that the granulate is ejected before, at or after it reaches the highest point of the ejection wheel.

In other words: the wheel rotates with the granulate about the axis of rotation. At the highest point of the ejection wheel in vertical direction the granulate has a velocity which substantially has a horizontal velocity component. The velocity component in vertical direction is comparatively small or near zero. If the granulate is ejected at this highest point it leaves the ejection wheel at an angle of approximately 0° to the horizontal. This ejection angle can be preferably varied in that the granulate leaves the ejection wheel before, at or after it reaches the highest point of the ejection wheel. Because of this, the granulate receives a substantial velocity component in vertical direction, so that it can be ejected at an angle > 0°, preferably 5° to the horizontal. Because of this, the range, i.e. the distance, in which the granulate can be ejected, can be advantageously substantially increased or decreased.

Varying the ejection angle is adjusted in particular in that the angle at which the belt leaves the ejection wheel in the upper region is varied, wherein both a positive and negative angle are possible. If the belt leaves the ejection wheel substantially horizontally an ejection angle of 0° to the horizontal is approximately obtained. The steeper the belt leaves the ejection wheel, i.e. the greater the angle with respect to the horizontal at which the belt leaves the ejection wheel, the greater becomes the ejection angle at which the granulate leaves the ejection wheel. For the steeper the belt leaves the ejection wheel, the earlier the belt separates from the ejection wheel so that the intermediate space can be opened earlier and the granulate receives a substantial velocity component in the vertical direction.

According to the invention the angle of the belt during the separation (corresponds in particular to the ejection angle) can be adjusted in particular through a height-adjustable roller about which the belt after leaving the ejection wheel is wrapped. If the roller is shifted upwards, the belt separates from the ejection wheel at a greater angle to the horizontal and the ejection angle
of the granulate becomes greater. If the roller is shifted downwards the belt separates from the ejection wheel at a smaller angle to the horizontal and the ejection angle of the granulate becomes smaller.

According to a preferred embodiment, the entire distribution device can be arranged in an inclined manner at an angle to the horizontal. In particular, the distribution device can be tilted about the axis of rotation of the ejection wheel. The distribution device can thus be set by an angle to the horizontal so that an increase or decrease in the range is obtained.

The ejecting width or range can be preferably adjusted in that the rotary speed of the ejection wheel is changed. If the rotary speed of the ejection wheel is increased, the ejection distance of the granulate is also increased; if the rotary speed of the ejection wheel is reduced, the ejection distance of the granulate is also reduced.

An optional or alternative possibility of adjusting the ejection distance preferably consists in using different sizes of ejection wheels. In the case of larger ejection wheels, the velocity on the outer circumference or on the lateral surface is also larger so that the granulate reaches a higher velocity and can be ejected further. In the case of smaller ejection wheels, the outer circumferential velocity is smaller so that the granulate reaches a lower velocity and the ejection distance is smaller.

According to another preferred further development it is provided that the groove has a rectangular cross section. It is preferred, furthermore, that the groove is arranged in the middle of the lateral surface of the ejection wheel designed disc-shaped. In addition to this it can be preferably provided that the groove is arranged completely circumferentially in the lateral surface of the ejection wheel. Completely circumferential means that the groove extends over 360° in the outer surface, i.e. is designed continuously or endlessly. Through the circumferential design of the groove it is advantageously possible that the intermediate space can be designed continuously, i.e. without interruption. Because of this, granulate can be fed in and accelerated in any position of the ejection wheel and a comparatively large and uninterrupted quantity of granulate can be conveyed.

According to a preferred embodiment it is provided that the belt is non-positively (German: kraftschlüssig) connected, especially friction connected, to the ejection wheel at least in regions. Because of this the movement of the belt can be advantageously transmitted to the ejection wheel or the movement of the ejection wheel transmitted to the belt. Non-positively, especially friction connected, is to mean in particular at least predominantly, preferentially exclusively a frictional force which is created through the contact of the ejection wheel with the belt. It is additionally preferably provided that the belt is non-positively connected, especially friction connected, to the outer (lateral) surface of the ejection wheel at least in regions. To this end, the belt is in contact with a part of the outer surface of the ejection wheel in a frictionally joined manner.

According to another preferred embodiment it is provided that the belt wraps the ejection wheel approximately by half. In other words: the belt is arranged round about approximately half of the ejection wheel and is in contact with the outer surface of the ejection wheel in this region. Through this wrapping, the intermediate space for receiving the granulate is formed in particular. Because of this an optimal force transmission between the belt and the ejection wheel can be advantageously achieved. In particular, the wrap angle can be between 150° and 210°, preferably between 175° and 185°. In addition, an optimal acceleration of the granulate can be achieved with this wrap angle, since the granulate is accelerated approximately over half a rotation of the ejection wheel.

According to another preferred further development it is provided that the belt is a continuous belt which at least in regions wraps the ejection wheel and at least one roller at least in regions. Because of this a particularly simple construction of the distribution device can be achieved. It can be provided furthermore that the distribution device comprises two, three or more rollers about which the belt runs or which are at least in regions wrapped by the belt.

It can be provided in particular that the belt can be driven through a driver roller, wherein the belt drives the rotation of the ejection wheel via a non-positive connection, especially friction connection. Because of this a separation of drive and ejection wheel can be advantageously achieved, as a result of which the construction can be simplified. Alternatively it can be provided that the ejection wheel is directly driven by a drive and the ejection wheel drives the belt via the non-positive connection, especially friction connection.

According to a further aspect of the invention, multiple, in particular different ejection wheels are arranged next to one another. These can be arranged in particular on a common, in particular driven axis of rotation.

Exemplary embodiments of the present invention are shown in the drawings and are explained in more detail in the following description.

### Brief description of the drawings.

It shows, schematically
- Figure 1: a distribution device according to an exemplary embodiment of the present invention and
- Figure 2: an ejection wheel for a distribution device according to an exemplary embodiment of the present invention.

### Embodiments of the invention

In the various figures, same parts are always marked with the same reference characters and are therefore as a rule only named or mentioned once each.

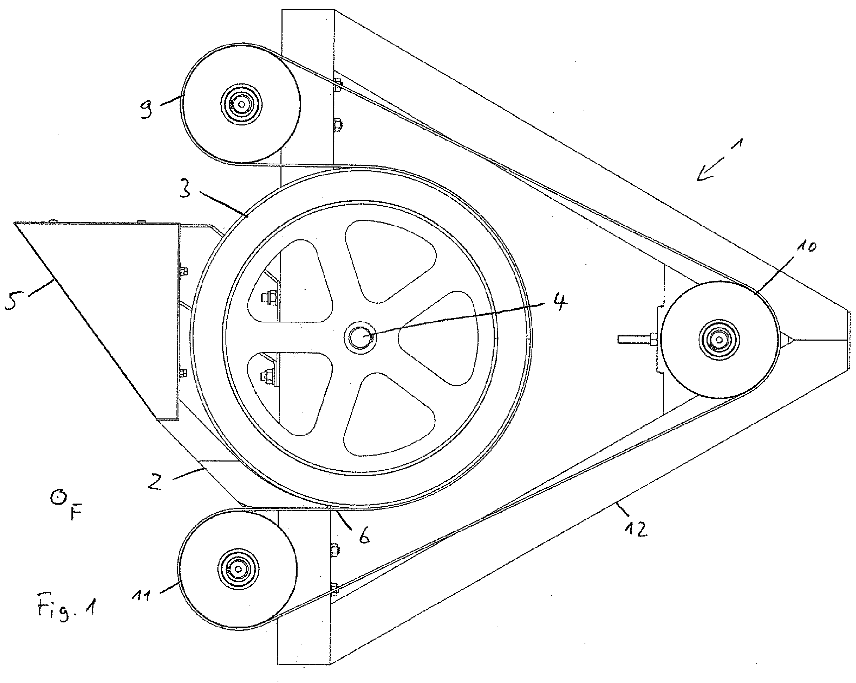

Figure 1 schematically shows a distribution device 1 according to an exemplary embodiment in a lateral view. The distribution device I can be laterally attached to a vehicle which is not shown, which moves in a travelling direction F, so that the distribution device 1 can eject a granulate which is not shown with respect to the vehicle or the travelling direction or the travelling direction on the side, in other words laterally.

The distribution device 1 comprises a charging hopper 5, which is mounted to a triangularly designed frame 12. Granulate which is not shown (for example fertiliser), which is to be output by the distribution device 1, is present in the charging hopper 5. From the charging hopper 5 the granulate reaches a space between a belt 6 and an ejection wheel 3 through a feeder pipe 2 arranged under the charging hopper 5. The granulate falls onto the belt 6 which is driven so that the granulate is conveyed away from the feeder pipe 2 by the belt 6.

The distribution device 1 comprises an ejection wheel 3 which is rotatable about an axis of rotation 4. The axis of rotation 4 in this embodiment is horizontally orientated. The ejection wheel 3 is driven by a drive so that the ejection wheel 3 rotates in anti-clockwise direction. The circular disc-shaped ejection wheel 3 in this embodiment comprises on its outer circumferential side surface (outer or lateral) 8 a groove 7 which is not shown in figure 1, which is formed on the ejection wheel 3 in a completely circumferential manner. In this groove, the granulate, which is present on the belt 6, is introduced through the movement of the belt 6 so that the granulate is arranged in a space or intermediate space which is formed by the groove 7 and by the belt 6.

Through the movement of the ejection wheel 3 the belt 6 is driven because the belt 6 is in contact with the outer surface 8 of the ejection wheel 3 in regions and because of this the belt 6 is non-positively connected, especially friction connected, to the ejection wheel 3 in such a manner that the ejection wheel 3 can drive the belt 6. In this exemplary embodiment, the belt 6 is in contact with the right part of the ejection wheel 3 and as the ejection wheel 3 is driven in the anti - clockwise direction the belt is in this region likewise driven in anti-clockwise direction.

The granulate, which is present in the intermediate space between the groove 7 and the belt 6 is conveyed through the movements of the ejection wheel 3 and the belt 6 likewise in anti-clockwise direction, i.e. from the bottom up, wherein the centrifugal forces which in the process act on the granulate press the granulate onto the belt 6 so that the granulate cannot fall out towards the bottom. In this exemplary embodiment, the belt 6 wraps the ejection wheel 3 approximately at an angle of 180°, i.e. the belt 6 wraps the ejection wheel 3 approximately by half. In the upper region of the ejection wheel 3 the belt 6 separates from the ejection wheel 3. Because of this the conveyed granulate is ejected to the left or to the outside.

In this exemplary embodiment, the belt 6 is a continuous belt. The belt 6 not only wraps the ejection wheel 3 but also an upper roller 9, an inner roller 10 and a lower roller 11. The upper roller 9 is arranged above the ejection wheel 3 and offset towards the outside with respect to the axis of rotation 4. The belt 6 thus separates in the upper region of the ejection wheel 3 and thereafter wraps the outer or left region of the upper roller 9.

From the upper region of the upper roller 9 the belt 6 runs to the inner roller 10, which is driven in clockwise direction. The inner roller 10 is arranged offset to the right or to the inside with respect to the ejection wheel 3. wherein in this exemplary embodiment the axis of rotation of the inner roller 10 is vertically arranged at the same height as the axis of rotation 4 of the ejection wheel 3. The belt 6 wraps the inner, i.e. right part of the inner roller 10 and thereafter runs to the lower region of the inner roller 10.

The belt 6 wraps the outer or left region of the lower roller 11. The lower roller 11 is arranged in vertical direction below the ejection wheel 3. In addition, the lower roller 11 with its axis of rotation is arranged offset to the left or towards the outside with respect to the axis of rotation 4 of the ejection wheel 3. The lower roller 11 rotates in clockwise direction and the belt 6 leaves the upper region of the lower roller 11. Thereafter, the belt 6 runs to the lower region of the ejection wheel 3. In this intermediate region, the feeder pipe 2 or the output of the feeder pipe 2 is arranged, so that the granulate can fall out of the feeder pipe 2 onto the belt 6 before the belt reaches the lower region of the ejection wheel 3.

In the distribution device 1, the direction of the ejected granulate can be adjusted. To this end, the upper roller 9 can be offset vertically to the top and to the bottom. If the upper roller 9 is offset towards the top, the belt 6 separates from the ejection wheel 3 earlier so that the granulate can be ejected at a greater angle to the horizontal. If the upper roller 9 is offset further downwards the belt 6 separates from the ejection wheel 3 later, as a result of which the granulate can be ejected at a smaller angle to the horizontal or parallel to the horizontal or even at a negative angle to the horizontal.

In addition, the ejection distance of the granulate can also be indirectly adjusted via the upper roller 9, which can be adjusted by adjusting the ejection angle. If the ejection angle is increased relative to the horizontal, the ejecting distance is increased, if the angle to the horizontal is reduced, the ejecting distance is reduced. The ejecting distance can be additionally adjusted furthermore in that the rotary speed of the ejection wheel 3 is changed. When the rotary speed of the ejection wheel 3 is increased, the ejection distance of the granulate is also increased; if the rotary speed of the ejection wheel 3 is reduced, the ejection distance of the granulate is also reduced.

A further possibility of adjusting the ejection direction or the ejection distance consists in using different sizes of ejection wheels 3. In the case of larger ejection wheels 3, the velocity and the outer circumference is also larger so that the granulate reaches a higher velocity and can be ejected further. In the case of smaller ejection wheels 3 the outer circumferential velocity is smaller, so that the granulate reaches a lower velocity and the ejection distance is smaller.

Optionally it can be provided that the distribution device 1 altogether can be turned about the axis of rotation 4 of the ejection wheel 3. By turning the distribution device 1 an angle between the connecting line between the axis of rotation 4 and the axis of rotation of the inner roller 10 and the horizontal can be achieved. When the distribution device 1 is orientated at a positive angle to the horizontal, the ejection distance can be increased; when the distribution device 1 is orientated at a negative angle to the horizontal, the ejection distance can be reduced.

The diameter of the ejection wheel 3 amounts to approximately 500 to 540 mm, preferably 510 to 530 mm, further preferably 515 to 525 mm. The circumferential velocity of the ejection wheel 3, i.e. the velocity of a point on the outer circumference of the ejection wheel 3 is a maximum of 60 m/s. The width of the belt 6 amounts to 90 to 110 mum, preferably 95 to 105 mm, The width of the groove 7 amounts to approximately 20 to 40 mm, preferably 25 to 35 mm, further preferably 28 to 32 mm.

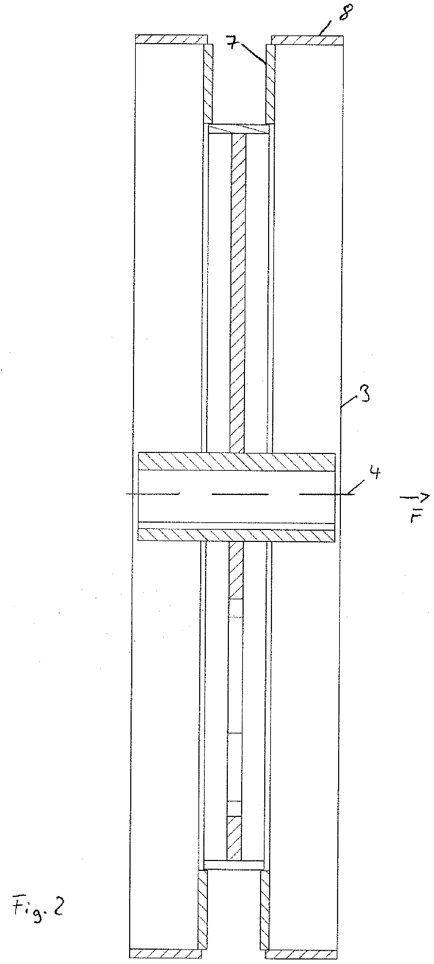

Figure 2 schematically shows the ejection wheel 3 according to an exemplary embodiment in a lateral view. The ejection wheel 3 on its outer surface 8 comprises a groove 7, which is arranged 360° circumferentially about the entire outer circumference of the ejection wheel 3. The groove 7 has to be large enough in order to be able to receive an adequate quantity of granulate. Preferentially, the groove is several centimetres deep. The ejection wheel 3 is designed rotation-symmetrically to its axis of rotation 4. A continuous bore, which serves for receiving a shaft or the like runs in the middle along the axis of rotation 4. Otherwise, reference is made to the explanations regarding Figure 1.

For the sake of clarity it is pointed out that the exemplary embodiments described above merely serve to illustrate the invention and are not intended to restrict the subject of the invention as defined in the appended claims.

### List of reference characters

- 1: Distribution device
- 2: Feeder pipe
- 3: Ejection wheel
- 4: Axis of rotation
- 5: Feeding hopper
- 6: Belt
- 7: Groove
- 8: Outer surface
- 9: Upper roller
- 10: Inner roller
- 11: Lower roller
- 12: Frame
- F: Travelling direction

## Claims

1. A distribution device (1) for ejecting granulate, in particular fertiliser granulate, comprising an acceleration device for accelerating the granulate, wherein the acceleration device comprises an ejection wheel (3) provided with a groove (7) and a belt (6), wherein the acceleration device is designed in such a manner that the ejection wheel (3) for accelerating the granulate is designed rotatably, wherein the granulate for acceleration can be received in an intermediate space formed by the groove (7) and the belt (6), wherein the acceleration device (3, 6) is designed in such a manner that the granulate is conveyed by the ejection wheel (3) seen in vertical direction from the bottom up, **characterized in that** the angle at which the belt (6) leaves the ejection wheel (3) can be adjusted.

2. The distribution device (1) according to Claim 1, **characterized in that** the ejection wheel (3) can be rotated about a horizontally arranged axis of rotation (4).

3. The distribution device (1) according to any one of the preceding claims, **characterized in that** the groove (7) is arranged completely circumferentially on the lateral surface of the ejection wheel (3).

4. The distribution device (1) according to any one of the preceding claims, **characterized in that** the belt (6) is non-positively connected, especially friction connected, to the ejection wheel (3) at least in regions.

5. The distribution device (1) according to any one of the preceding claims, **characterized in that** the belt (6) wraps the ejection wheel (3) by approximately half.

6. The distribution device (1) according to any one of the preceding claims, **characterized in that** the belt (6) is an endless belt, which wraps the ejection wheel (3) at least in regions and at least one roller (9, 10, 11) at least in regions.

7. The distribution device (1) according to any one of the preceding claims, **characterized in that** the ejection wheel (3) can be driven, wherein the ejection wheel (3) drives the belt (6) via a non-positive connection, especially friction connection.

8. The distribution device (1) according to any one of the preceding claims, **characterized in that** the distribution device (1) can be arranged in an inclined manner at an angle to the horizontal,

9. The distribution device (1) according to any one of the preceding claims, **characterized in that** the ejection wheel (3) is designed ejecting the granulate in an ejecting direction transversely to a longitudinal axis of the distribution device (1) running in travelling direction (F).

## Patentansprüche

1. verteilervorrichtung (1) zum Ausstoßen von Granulat, insbesondere Düngemittelgranulat, umfassend eine Beschleunigungsvorrichtung zum Beschleunigen des Granulats, wobei die Beschleunigungsvorrichtung ein Ausstoßrad (3) umfasst, das mit einer Nut (7) und einem Riemen (6) versehen ist, wobei die Beschleunigungsvorrichtung auf eine solche Weise gestaltet ist, dass das Ausstoßrad (3) zum Beschleunigen des Granulats drehbar ausgeführt ist, wobei das Granulat zur Beschleunigung in einem Zwischenraum, der durch die Nut (7) und den Riemen (6) gebildet wird, aufgenommen werden kann, wobei die Beschleunigungsvorrichtung (6, 7) auf eine solche Weise gestaltet ist, dass das Granulat durch das Ausstoßrad (3) in einer senkrechten Richtung gesehen von der Unterseite nach oben befördert wird, **dadurch gekennzeichnet, dass** der Winkel, in dem der Riemen (6) das Ausstoßrad (3) verlässt, reguliert werden kann.

2. Verteilungsvorrichtung (1) nach Anspruch 1, **dadurch gekennzeichnet, dass** das Ausstoßrad (3) um eine waagerecht angeordnete Drehachse (4) gedreht werden kann.

3. Verteilungsvorrichtung (1) nach einem der vorhergehenden Ansprüche, **dadurch gekennzeichnet, dass** die Nut (7) über die gesamte Umfangsrichtung an der Seitenfläche des Ausstoßrads (3) eingerichtet ist.

4. Verteilungsvorrichtung (1) nach einem der vorhergehenden Ansprüche, **dadurch gekennzeichnet, dass** der Riemen (6) wenigstens in Bereichen kraftschlüssig, insbesondere durch Reibung, mit dem Ausstoßrad (3) verbunden ist.

5. Verteilungsvorrichtung (1) nach einem der vorhergehenden Ansprüche, **dadurch gekennzeichnet, dass** der Riemen (6) das Ausstoßrad (3) ungefähr zur Hälfte umschlingt.

6. Verteilungsvorrichtung (1) nach einem der vorhergehenden Ansprüche, **dadurch gekennzeichnet, dass** der Riemen (6) ein Endlosriemen ist, der das Ausstoßrad (3) wenigstens in Bereichen und wenigstens eine Rolle (9, 10, 11) wenigstens in Bereichen umschlingt.

7. Verteilungsvorrichtung (1) nach einem der vorhergehenden Ansprüche, **dadurch gekennzeichnet, dass** das Ausstoßrad (3) angetrieben werden kann, wobei das Ausstoßrad (3) den Riemen (6) über eine kraftschlüssige Verbindung, insbesondere eine Reibverbindung, antreibt.

8. Verteilungsvorrichtung (1) nach einem der vorhergehenden Ansprüche, **dadurch gekennzeichnet, dass** die Verteilungsvorrichtung (1) auf eine in einem Winkel zu der Waagerechten geneigte Weise angeordnet werden kann.

9. Verteilungsvorrichtung (1) nach einem der vorhergehenden Ansprüche, **dadurch gekennzeichnet, dass** das Ausstoßrad (3) so gestaltet ist, dass es das Granulat in einer Ausstoßrichtung quer zu einer Längsachse der in einer Fahrtrichtung (F) fahrenden Verteilungsvorrichtung (1) ausstößt.

## Revendications

1. Dispositif de distribution (1) pour éjecter des granulés, en particulier des granulés d'engrais, comprenant un dispositif d'accélération pour accélérer les granulés, dans lequel le dispositif d'accélération comprend une roue d'éjection (3) dotée d'une rainure (7) et une courroie (6), dans lequel le dispositif d'accélération est conçu de telle façon que la roue d'éjection (3) pour accélérer les granulés est conçue rotative, dans lequel les granulés, pour l'accélération, peuvent être reçus dans un espace intermédiaire formé par la rainure (7) et la courroie (6), dans lequel le dispositif d'accélération (3, 6) est conçu de telle façon que les granulés sont transportés par la roue d'éjection (3) vu dans le sens vertical depuis le bas, **caractérisé en ce que** l'angle auquel la courroie (6) quitte la roue d'éjection (3) peut être ajusté.

2. Dispositif de distribution (1) selon la revendication 1, **caractérisé en ce que** la roue d'éjection (3) peut être tournée sur un axe de rotation (4) agencé horizontalement.

3. Dispositif de distribution (1) selon l'une quelconque des revendications précédentes, **caractérisé en ce que** la rainure (7) est agencée sur le pourtour complet de la surface latérale de la roue d'éjection (3).

4. Dispositif de distribution (1) selon l'une quelconque des revendications précédentes, **caractérisé en ce que** la courroie (6) est reliée de façon non-positive, reliée en particulier par friction à la roue d'éjection (3), au moins par zones.

5. Dispositif de distribution (1) selon l'une quelconque des revendications précédentes, **caractérisé en ce que** la courroie (6) enveloppe la roue d'éjection (3) d'approximativement la moitié.

6. Dispositif de distribution (1) selon l'une quelconque des revendications précédentes, **caractérisé en ce que** la courroie (6) est une courroie sans fin qui enveloppe la roue d'éjection (3) au moins par zones et au moins un rouleau (9, 10, 11) au moins par zones.

7. Dispositif de distribution (1) selon l'une quelconque des revendications précédentes, **caractérisé en ce que** la roue d'éjection (3) peut être entraînée, dans lequel à roue d'éjection (3) entraîne la courroie (6) par le biais d'une liaison non-positive, en particulier une liaison par friction.

8. Dispositif de distribution (1) selon l'une quelconque des revendications précédentes, **caractérisé en ce que** le dispositif de distribution (1) peut être agencé de façon inclinée à un angle par rapport à l'horizontale.

9. Dispositif de distribution (1) selon l'une quelconque des revendications précédentes, **caractérisé en ce que** la roue d'éjection (3) est conçue en éjectant les granulés dans une direction d'éjection transversalement à un axe longitudinal du dispositif de distribution (1) passant dans le sens de déplacement (F).
